# EUROPÄISCHE PATENTSCHRIFT

(11) **EP 1 537 984 B1**
(45) Veröffentlichungstag und Bekanntmachung des Hinweises auf die Patenterteilung: **21.02.2007**
(21) Anmeldenummer: 03027628.1
(22) Anmeldetag: 02.12.2003
(51) Int. Cl.: B29D 29/08, B29C 39/02, F16G 1/28, B29C 70/46, B29C 70/68, B29C 43/18

(54) **Verfahren zur Herstellung von Doppelzahnriemen**
Method for manufacturing of double toothed belts
Procédé pour fabriquer des courroies dentées à double denture

(43) Veröffentlichungstag der Anmeldung: 08.06.2005
(73) Patentinhaber: ContiTech Antriebssysteme GmbH, 30165 Hannover (DE)
(72) Erfinder: Fleck, Andreas, 30827 Garbsen (DE); Bederna, Chistoph, Dr., 31515 Wunstorf (DE); Kucharczyk, André, 29499 Gülden (DE); Rathje, Sören, 30163 Hannover (DE)
(74) Vertreter: Finger, Karsten

(56) Entgegenhaltungen:
- EP-A- 0 280 175
- WO-A-88/00878
- WO-A-02/084144
- DE-A- 3 202 473
- DE-A- 3 438 917
- US-A- 3 250 653
- US-A- 4 443 396
- US-A- 4 510 113
- US-B1- 6 240 993

## Beschreibung

Die vorliegende Erfindung betrifft ein Verfahren zur Herstellung von Doppelzahnriemen gemäß dem Oberbegriff des Anspruchs 1. Ferner betrifft die Erfindung einen Doppelzahnriemen, der nach dem Verfahren hergestellt wurde.

Aus der internationalen Klasse B29D29/08 (IPC8) sind Verfahren zur Herstellung von Zahnriemen bekannt.

Die in der DE 32 02 473 C2 zur Durchführung eines solchen Verfahrens vorgeschlagene Vorrichtung weist im Wesentlichen ein topfförmiges Gehäuse und einen in das Gehäuse einführbaren Kern auf. Die Innenfläche des Gehäuses und/oder die Außenoberfläche des Kerns sind jeweils mit einem zylindrischen, axial-gezahnt vorgeformten Gewebematerial versehen. Das Gewebematerial bildet später die Lauffläche des herzustellenden Riemens.

Weitere Verfahren und Vorrichtungen zur Herstellung von gezahnten Riemen sind z. B. aus der US-B-6 240 993, der WO 88/00878 A, der US-A-3 250 653, der EP-A-0 280 175 und der WO 02/084144 A bekannt.

Die Aufgabe der vorliegenden Erfindung besteht darin, ein Verfahren zur Herstellung eines Doppelzahnriemens zu beschreiben, bei dem auf hochpräzise Anfertigung und Montage der Werkzeuge weitgehend verzichtet werden kann, ohne dass die Qualität des Endproduktes darunter zu leiden hätte. Zu diesen Zwecken wird eine Vorrichtung beschrieben, die diesen Anforderungen gerecht wird.

Gelöst wird die Aufgabe durch ein Verfahren mit den Merkmalen des Anspruchs 1.

Doppelzahnriemen mit einer Oberflächenbeschichtung aus Gewebe und aufgeschweißter thermoplastischer Folie, wie sie nach einem Verfahren gemäß Anspruch 1 hergestellt werden können, weisen gegenüber herkömmlichen Doppelzahnriemen den wesentlichen Vorteil in einer erhöhten Verschleiß- und Abriebfestigkeit und geringerem Reibungskoeffizienten auf.

Während die Oberflächen herkömmlicher Riemen aus einer einfachen Gewebelage bestehen oder wobei die oberflächliche Gewebelage lediglich mit einem abdichtenden thermoplastischen oder elastomeren Material getränkt worden ist, besteht die Oberfläche des nach dem erfindungsgemäßen Verfahren hergesteltten Riemens aus einer Dublette, wobei auf eine aus Kette und Schuss bestehenden Gewebe- oder Gewirklage eine thermoplastische Folie aufdubliert/kaschiert worden ist. Zudem kann für die Folie ein spezielles Material gewählt werden, welches nicht mit dem Material des eigentlichen Riemens übereinstimmen muss. Die Folie besteht vorzugsweise aus Polyethylen.

Diese aus Gewebe und aufgeschweißter Folie bestehende Dublette wird thermoplastisch zu einem axial verzahnten, zylindrischen Strumpf formstabil und druckdicht ausgeformt und steht als Vorprodukt zur Fertigung eines beidseitig gezahnten Riemens zur Verfügung. Der Riemen kann mit oder ohne Zugstrangeinlage versehen sein.

Das in Anspruch 1 umschriebene Verfahren zur Fertigstellung der erfindungsgemäßen Doppelzahnriemens läuft folgendermaßen ab:
Das zylindrische (strumpfförmige), aus Gewebe und aufgeschweißter Folie bestehende und mit formstabiler Axial-Verzahnung versehene Vorprodukt wird auf eine axial-gezahnte Kernaußenfläche geschoben.
Zusätzlich zum Kern ist auch die zylindrische, axial-gezahnte Innenfläche des Gehäuses mit einer aus Gewebe und thermoplastischer Folie gebildeten Dublette, die zu einem axial-gezahnten Strumpf formstabil vorgeformt worden ist, belegt.
Die "unteren", zwischen axial-gezahntem Strumpf und Gehäuse befindlichen Zahnnuten werden vorzugsweise mittels einer zuvor eingefüllten geringen Teilmenge des Riemenmaterials abgedichtet.

Nach dem Eingießen des restlichen - vorzugsweise Polyurethan- Riemenmaterials in das mit axial-gezahntem Strumpf versehene Formaußenteil wird der mit axial-gezahntem Strumpf versehene Formkern in das Außenteil unter Druck eingepresst, wodurch sich das flüssige bzw. fließfähige Polyurethan-Material in den freien Zwischenraum ausbreitet und ihn schließlich gänzlich ausfüllt.

Die Vorrichtung zur Durchführung des Verfahrens besteht aus einer doppelwandigen Gießform: einem topfförmigen, zylindrischen Gehäuse und einem axial in das Gehäuse mittels eines Stempels einführbaren zylindrischen Kern. Der Zwischenraum dient zur Aufnahme zweier zylindrischer, axial-gezahnter, druckstabiler Strümpfe. Der zwischen dem einen und dem anderen Strumpf verbleibende Zwischenraum stellt das Volumen für den fertigzustellenden Doppelzahnriemen dar.

Darüber hinaus weist die topfförmige Außenform in ihrem Boden vorzugsweise eine umlaufende Nut zur Aufnahme einer geringen Teilmenge des aus Polyurethan herzustellenden Doppelzahnriemens auf.
Mit dieser Teilmenge werden die unteren, zwischen Strumpf und Gehäuseinnenfläche vorhandenen Zahnfugen abgedichtet, so dass beim späteren Auffüllen kein Riemenmaterial hinter die Strümpfe gelangen kann.

Eine weitere Besonderheit der Vorrichtung kann darin bestehen, dass die Nut als Entformungshilfe einen Hinterschnitt aufweist.

Die zylindrischen, axial-gezahnt vorgeformten Strümpfe aus mit einer thermoplastischen Folie kaschiertem Gewebe sind nur Vorprodukt (Halbzeug) des zu fertigenden Doppelzahnriemens.

Um beim Vergießen des Polyurethan-Materials im Fall von überschüssiger Menge ein Hinterfließen zu verhindern, ist es sinnvoll, die Strümpfe so zu dimensionieren, dass sie über die Gehäuseoberkante hinausragen.

Ein Beispiel zur Durchführung des erfindungsgemäßen Verfahrens wird anhand einer diesbezüglichen Vorrichtung näher erläutert. Es zeigen:
Fig.1, 2 und 3 verschiedene Schritte des erfindungsgemäßen Verfahrens, und zwar:
Fig. 1a einen Formkern mit aufgeschobenem (innerem) "Strumpf" und aufgespulter Zugträgerlage;
Fig. 1b das topfförmige Gehäuse einer Gießform;
Fig. 2a, b und c das Vorvergießen in die Nut des Formgehäuses (Außenform) und das Einlegen des (äußeren) Strumpfes in die Außenform;
Fig. 3 das Einpressen des mit (innerem) Strumpf versehenen Formkerns in das mit (äußerem) Strumpf versehene Formgehäuse;
Fig. 4 einen Abschnitt des fertigen Riemens, in perspektivischer Sicht;
Fig. 5 eine spezielle Ausgestaltung des Formgehäuses,

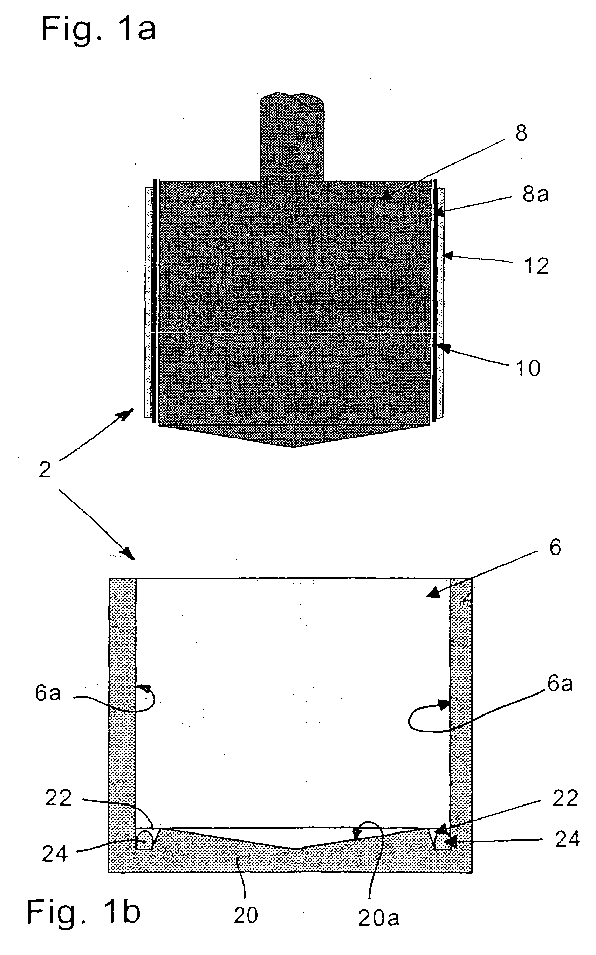

   (Fig. 1 bis 3 und 5 jeweils im Längsschnitt).

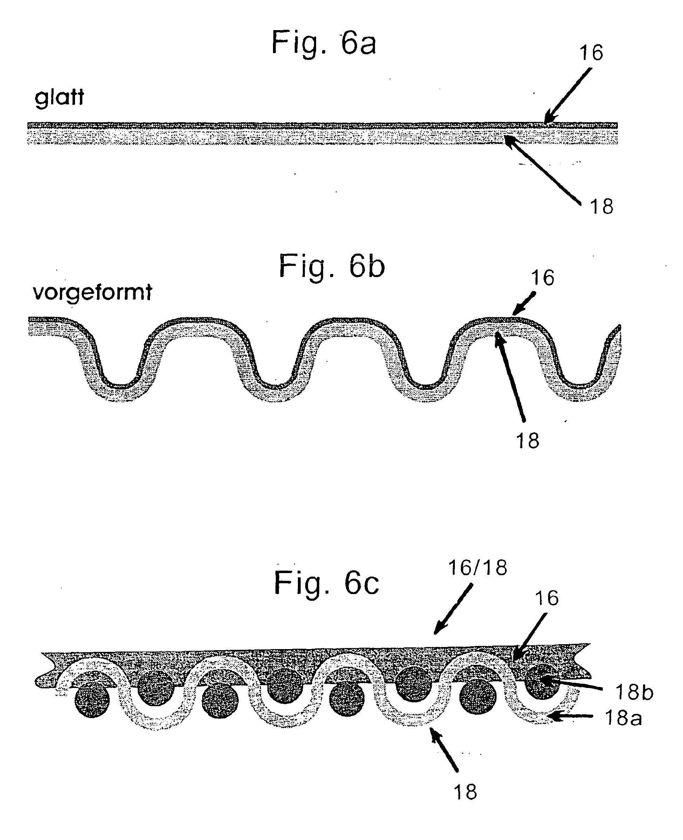

Fig. 6 zeigt das Gewebe-Verbundmaterial zur Herstellung eines Strumpfes als Vorprodukt (Halbzeug) eines Doppelzahnriemens, und zwar:
Fig. 6a glatt, und
Fig. 6b vorgeformt; und
Fig. 6c den Aufbau des Gewebeverbundmaterials.

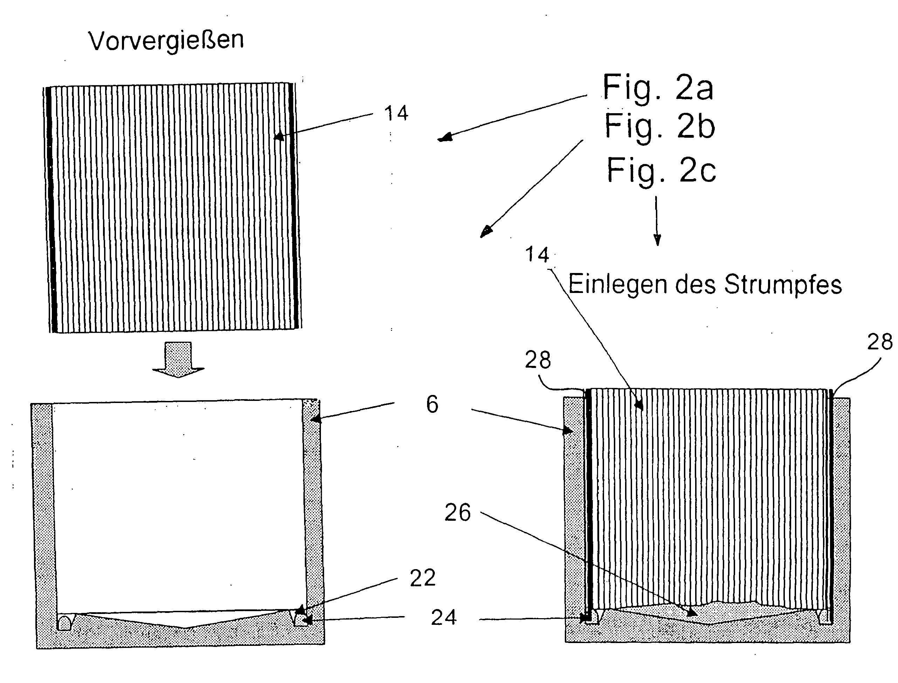

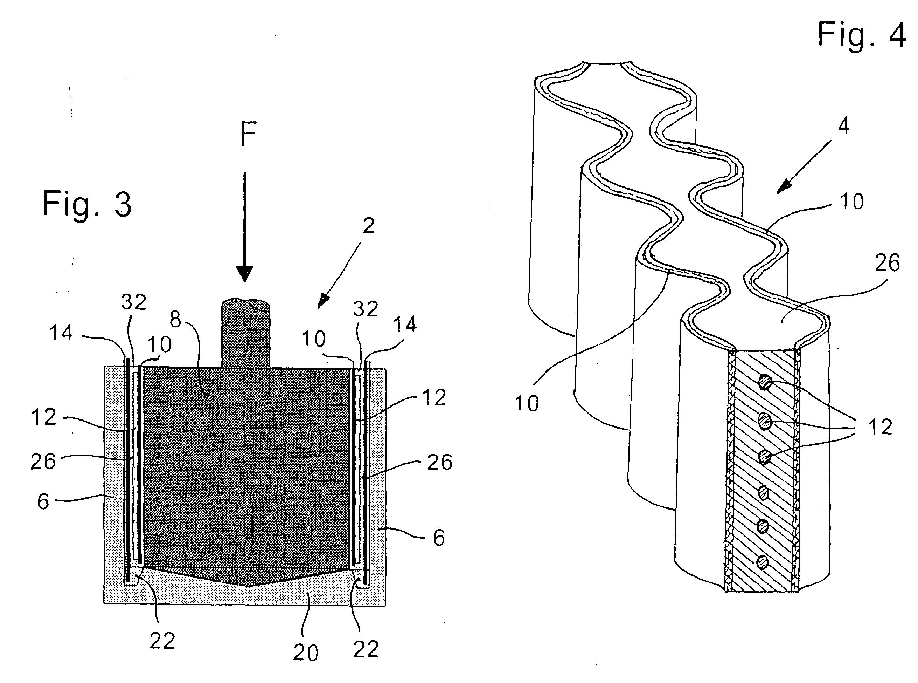

Die Vorrichtung 2 zur Fertigstellung der Doppelzahnriemen 4 (Fig. 4) besteht im Wesentlichen aus einer zweiteiligen Gießform 6, 8 und zwar aus einem topfförmigen äußeren Gehäuse 6 (Fig. 1b) mit (hohl-)zylindrischer, axial-gezahnter Innenfläche 6a und einem in das Gehäuse 6 einführbaren Kern 8 mit zylindrischer Außenfläche 8a (Fig. 1a). Über die zylindrische Außenfläche 8a des Kerns 8 ist ein zylindrischer "Strumpf" 10 geschoben, der eine axial-gezahnte Prägung aufweist. Auf den mit dem Strumpf 10 versehenen Kern 8 ist eine aus Stahldraht oder Textilfäden bestehende Zugträgereinlage 12 gespult (siehe auch Fig. 3).
Die hohl-zylindrische, axial-gezahnte Innenfläche 6a der Außenform 6 dient - ebenso wie die zylindrische Außenfläche 8a des Kerns 8 - zur Aufnahme eines weiteren zylindrischen Strumpfes 14 mit ebenfalls axial-gezahnter Prägung (Fig. 2a, 2c).

Die beiden zylindrischen Strümpfe 10 und 14 sind aus thermoplastischer Folie 16 und Gewebe 18 zusammengesetzte Dubletten (Fig. 6a: "glatt"), wobei die aus thermoplastischem Material bestehende Folie 16 und das aus Kette 18b und Schuss 18a gebildete Gewebe 18 zu einem Verbundmaterial 16/18 kaschiert (Fig. 6c) und zu einem nahtlosen zylindrischen Strumpf 10 bzw. 14 mit axial-gezahnter Prägung (Fig. 6b) druckstabil geformt worden ist.

Die in Fig. 1b dargestellte topfförmig hohlzylindrische Außenform (Gehäuse 6) weist auf der Innenseite 20a ihres Bodens 20 eine umlaufende Rinne (Nut) 22 zur Aufnahme einer geringen Teilmenge 24 des verwendeten Riemenmaterials 26 auf (Fig. 2c). Mit Hilfe der Teilmenge 24 wird der untere Rand des Strumpfes 14 gegenüber der zylindrischen Innenfläche 6a der Außenform 6 verschlossen, so dass anschließend kein Riemen-Material 26 in den Zwischenraum 28 zwischen Strumpf 14 und Zylinderinnenfläche 6a gelangen kann.

Die Fig. 3 zeigt eine komplette Vorrichtung 2 mit Formkern 8 nebst einem (Formkern-)Strumpf 10 und Außenform 6 nebst einem (Außenform-)Strumpf 14. Außerdem ist aus der Abbildung 3 die auf dem (Formkern-)Strumpf 10 gewickelte Zugstrangeinlage 12 aus Stahldraht oder Textilfäden zu sehen.
Der (Außenform-)Strumpf 14 ragt in die im Außenform-Boden 20 umlaufende Nut 22 hinein.
Der Pfeil F 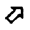 gibt die Bewegungs- bzw. Kraftrichtung beim Einpressen des Formkerns 8 in die Außenform 6 an.

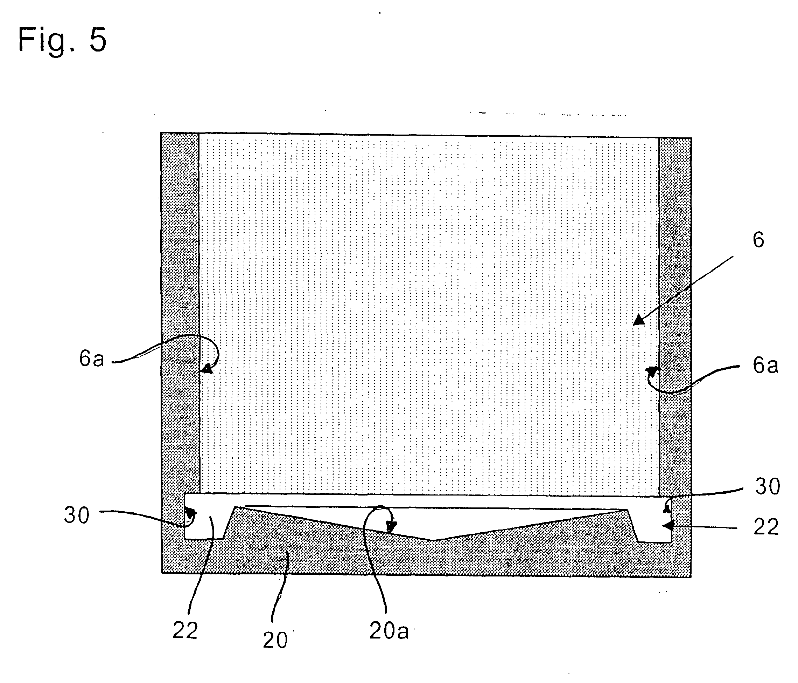

Die in Fig. 5 dargestellte erfindungsgemäße Weiterbildung der Außenform 6 ist dadurch charakterisiert, dass die im Boden 20 umlaufende Nut 22 einen in die zylindrische Innenfläche 6a eingelassenen Hinterschnitt 30 aufweist.

Die für die Erfindung relevante Wirkungsweise der Vorrichtung 2 wird anhand der zur Fertigung des Doppelzahnriemens 4 erforderlichen Verfahrensschritte ersichtlich:
- Aufschieben des Strumpfes 10 auf den Formkern 8 (Fig. 1a);
- Bespulen des Kerns 8 mit dem Zugträger 12 (Fig. 1a);
- Vorvergießen der umlaufenden abgesenkten Nut 22 im Gehäuseboden 20 mit einer geringen Menge Polyurethan 24 oder einem geeigneten vernetzenden Material (Fig. 2b);
- Einschieben des äußeren Zahnstrumpfes 14 in das Gehäuse 6 (Fig. 2c);
- Eingießen des restlichen Polyurethan-Materials 26 in das Formaußenteil bzw. Gehäuse 6 (Fig. 2c);
- Einpressen des Kerns 8 in das Außenteil 6 (Fig. 3). Dabei steigt das Polyurethan-Material 26 unter hohem Druck auf und füllt den "freien" Raum 32 aus; im Bereich der Nut (Sicke) 22 ist inzwischen der Strumpf 14 durch ein rasches Vernetzen des Materials (Teilmenge 24) gegen das Formgehäuse 6 abgedichtet und mechanisch fixiert.

### Bezugszeichenliste

- 2: Vorrichtung zur Fertigstellung eines Doppelzahnriemens
- 4: Riemen, Doppelzahnriemen
- 6, 8: zweiteilige Gießform
- 6: Gehäuse, Außenform, Formaußenteil, Formgehäuse
- 6a: hohlzylindrische, axial-gezahnte Innenfläche des Gehäuses
- 8: Kern, Formkern
- 8a: zylindrische, axial-gezahnte Außenfläche des Kerns
- 10: zylindrischer Strumpf (Formkern-Strumpf)
- 12: Zugträgereinlage, Zugstrangeinlage, Zugträger
- 14: zylindrischer Strumpf, Zahnstrumpf (Außenform-Strumpf)
- 16: thermoplastische Folie
- 18: Gewebe
- 18a: Kette
- 18b: Schuss
- 16/18: Verbundmaterial, Dublette
- 20: Boden des Gehäuses, Außenform-Boden, Gehäuseboden
- 20a: Innenseite des Bodens
- 22: Rinne, Nut
- 24: Teilmenge des Riemenmaterials
- 26: Riemenmaterial, Polyurethan-Material, thermoplastisches oder elastomeres Material
- 28: Zwischenraum zwischen Strumpf 26 und Gehäuseinnenfläche 6a
- 30: Hinterschnitt
- 32: "freier" Raum

## Patentansprüche

1. Verfahren zur Herstellung eines mit oder ohne Zugstrangeinlage (12) versehenen, aus thermoplastischem oder elastomerem Material (26) bestehenden Doppelszahnriemens (4), dessen gezahnte Oberflächen jeweils mit einer, ein Gewebe (18) aufweisenden Oberflächenbeschichtung versehen sind,
mit Hilfe einer Gießform (6, 8), die im Wesentlichen aus einem topfförmigen äußeren Gehäuse (6) mit hohl-zylindrischer, axial-gezahnter Innenfläche (6a) und einem in das Gehäuse (6) einführbaren zylindrischen, axial-gezahnten Kern (8) besteht,
wobei die zylindrische Innenfläche (6a) des topfförmigen Gehäuses (6) und die zylindrische Außenfläche (8a) des Kerns (8) jeweils mit einem zylindrischen, axial-gezahnten Strumpf (10 und 14) versehen wird,
wobei die zylindrisch axial-gezahnten Strümpfe (10, 14) aus Gewebe (18) und aufgeschweißter thermoplastischer Folie (16) bestehen und als formstabiles Verbundmaterial (16/18) vorgeformt sind,
wobei der mit axial-gezahntem Strumpf (10) versehene Kern (8) mit einem Zugträger (12) bespult wird, und
wobei thermoplastisches Material (26) in das Gehäuse (6) gegossen und anschließend der Kern (8) in das Formgehäuse (6) geschoben wird,
so dass thermoplastisches Material (26) den freien Zwischenraum (32) zwischen den mit den Strümpfen (10, 14) belegten Form-Teilen (6, 8) ausfüllt,
wobei vor Einschieben des äußeren Strumpfes (14) in das Gehäuse (6) eine Teilmenge (24) vernetzenden Materials in eine im Boden (20) des Gehäuses (6) umlaufende Nut (22) zur Abdichtung zwischen Strumpf (14) und zylindrischer Innenfläche (6a) des Gehäuses (6) vergossen wird und die Hauptmenge vernetzenden Materials (26) nach dem Einschieben des äußeren Strumpfes (14) in das Gehäuse (6) gegossen wird.

2. Verfahren nach Anspruch 1,
**dadurch gekennzeichnet,**
**dass** die Strümpfe (10, 14) über die Oberkante des topfförmigen Gehäuses (6) überstehen.

3. Verfahren nach Anspruch 1 oder 2, **dadurch gekennzeichnet, dass** Gewebe (18) aus Polyamid und/oder Aramid und die Folie (16) aus Polyethylen und/oder Polypropylen besteht.

4. Verfahren nach zumindest einem der Ansprüche 1 bis 3, **dadurch gekennzeichnet, dass** die Folie (16) eine Stärke von 0,05 mm bis 0,5 mm aufweist.

5. Doppelzahnriemen, der nach einem Verfahren gemäß den Ansprüchen 1 bis 4 hergestellt ist.

## Claims

1. Method for manufacturing a double toothed belt (4), which is provided with or without a tensioning strand insert (12), consists of thermoplastic or elastomeric material (26) and the toothed surfaces of which are in each case provided with a surface coating comprising a woven fabric (18),
with the aid of a casting mould (6, 8), which substantially comprises a pot-shaped outer housing (6) with a hollow-cylindrical, axially toothed inner surface (6a) and a cylindrical, axially toothed core (8) which can be inserted into the housing (6),
the cylindrical inner surface (6a) of the pot-shaped housing (6) and the cylindrical outer surface (8a) of the core (8) being provided in each case with a cylindrical, axially toothed hose (10 and 14),
the cylindrical axially toothed hoses (10, 14) consisting of woven fabric (18) and a welded-on thermoplastic film (16) and being pre-formed as a dimensionally stable composite material (16/18),
the core (8), provided with the axially toothed hose (10), being wound with a tensile load-bearing element (12), and
thermoplastic material (26) being poured into the housing (6) and the core (8) subsequently being pushed into the mould housing (6),
so that thermoplastic material (26) fills the free intermediate space (32) between the mould parts (6, 8) covered with the hoses (10, 14),
a partial amount (24) of crosslinking material being poured into a peripheral groove (22) in the bottom (20) of the housing (6), to provide a seal between the hose (14) and the cylindrical inner surface (6a) of the housing (6), before the outer hose (14) is pushed into the housing (6), and the main amount of crosslinking material (26) being poured into the housing (6) after the outer hose (14) has been pushed in.

2. Method according to Claim 1, **characterized in that** the hoses (10, 14) protrude beyond the upper edge of the pot-shaped housing (6).

3. Method according to Claim 1 or 2, **characterized in that** the woven fabric (18) consists of polyamide and/or aramid and the film (16) consists of polyethylene and/or polypropylene.

4. Method according to at least one of Claims 1 to 3, **characterized in that** the film (16) has a thickness of from 0.05 mm to 0.5 mm.

5. Double toothed belt produced by a method according to Claims 1 to 4.

## Revendications

1. Procédé de fabrication d'une courroie (4) à double denture dotée ou non d'une garniture de traction (12), constituée d'un matériau thermoplastique ou élastomère (26) et dont les surfaces dentées sont toutes dotées d'un revêtement de surface qui présente un tissu (18),
- à l'aide d'un moule de coulée (6, 8) qui est constitué essentiellement d'un boîtier extérieur (6) en forme de chapeau qui présente une surface intérieure (6a) en cylindre creux et à denture axiale et une âme cylindrique (8) à denture axiale qui peut être insérée dans le boîtier (6),
- dans lequel la surface inférieure cylindrique (6a) du boîtier (6) en forme de chapeau et la surface extérieure cylindrique (8a) de l'âme (8) sont toutes deux dotées d'un manchon cylindrique (10 et 14) à denture axiale,
- dans lequel les manchons cylindriques (10, 14) à denture axiale sont constitués d'un tissu (18) sur lequel est soudée une feuille thermoplastique (16) et sont préformés sous la forme d'un matériau composite (16/18) indéformable,
- dans lequel un renfort de traction (12) est enroulé autour de l'âme (8) dotée du manchon (10) à denture axiale,
- dans lequel le matériau thermoplastique (26) est coulé dans le boîtier (6), l'âme (8) étant ensuite passée dans le boîtier (6) du moule,
- de telle sorte que le matériau thermoplastique (26) remplisse l'espace intermédiaire libre (32) entre les parties de moule (6, 8) occupées par les manchons (10, 14),
- et avant l'insertion du manchon extérieur (14) dans le boîtier (6), une partie (24) du matériau en réticulation est coulée dans une rainure (22) qui entoure le fond (20) du boîtier (6) pour assurer l'étanchéité entre le manchon (14) et la surface cylindrique intérieure (6a) du boîtier (6), la majeure partie du matériau (26) en réticulation étant coulée après l'insertion du manchon extérieur (14) dans le boîtier (6).

2. Procédé selon la revendication 1, **caractérisé en ce que** les manchons (10, 14) débordent du côté supérieur du boîtier (6) en forme de chapeau.

3. Procédé selon les revendications 1 ou 2, **caractérisé en ce que** le tissu (18) est constitué de polyamide et/ou d'aramide, la feuille (16) étant constituée de polyéthylène et/ou de polypropylène.

4. Procédé selon au moins l'une des revendications 1 à 3, **caractérisé en ce que** la feuille (16) a une épaisseur de 0,05 mm à 0,5 mm.

5. Courroie à double denture fabriquée par un procédé selon les revendications 1 à 4.
